# EUROPEAN PATENT SPECIFICATION

(11) **EP 0 297 114 B1**
(45) Date of publication and mention of the grant of the patent: **22.06.1994**
(21) Application number: 87907994.5
(22) Date of filing: 11.12.1987
(51) Int. Cl.: A22C 17/04, A22C 21/00

(54) **DEVICE FOR FILLETING OF MEAT**
VORRICHTNG ZUM FILETIEREN VON FLEISCH
DISPOSITIF POUR DECOUPER LA VIANDE EN FILETS

(30) Priority: 07.01.1987 NO 870070
(43) Date of publication of application: 04.01.1989
(60) Divisional application: 91100916.5
(73) Proprietor: MATFORSK NORSK INSTITUTT FOR NAERINGSMIDDELFORSKNING, N-1430 As (NO)
(72) Inventor: MIELNIK, Jan, N-1430 As (NO)
(74) Representative: Barlow, Roy James
(86) International application number: PCT/NO87/00079
(87) International publication number: WO 88/04894

(56) References cited:
- US-A- 2 419 424
- US-A- 3 216 056
- US-A- 3 672 000
- US-A- 4 041 572
- US-A- 4 327 463
- US-A- 4 380 849

## Description

The present invention concerns a device for filleting meat material containing bones, especially from live-stock, such as poultry and pigs, where the filleted meat is kept mainly intact.

There are previously known mechanised methods for filleting of meat from bone-containing material. Such devices, however, suffer from several weaknesses both in construction and embodiments.

The general problem with filleting of bone-containing meat material where the bone consists of a central bone which runs through the piece of meat, for instance a thigh-bone from chicken, lies in the shape of the bone. Generally, such a bone consists of a more or less straight bone pipe with an expansion (knuckle/club) on each end. These knuckles form an obstacle to mechanically pressing off the meat from the bone, both as they work physically as a stopper for the meat during the pressing off and in addition because knives which are used by the mechanical filleting have a tendency to dull when they cut into the bone material.

It is thus known within the art a machine from Protecon systems (Protecon Automatic Deboning Systems for Poultry, P.A.D.) for automatic filleting of thigh bones and wings from poultry. This system comprises inter alia a transport band with upwardly extending pins for introduction of the meat pieces in the filleting machine. However, such an embodiment of the transport band will, when used, cause the meat material to stick between the pins and the transport band and prevent further operation of the machine until it has been cleaned. This will lead to a stop in the operation and wasted working time. A further drawback of such a machine is that possibly broken bones in the material are not considered. In industrially handled material, there may be as much as up to 30-40 % broken bones and this results in the finished filleted material from the filleting machine containing unacceptably large amounts of bone material.

Also the forms of the transport band represent a drawback by the mentioned type of machine. These forms have no possibility for regulation, so that small meat pieces will be a poorly attached and may thus be led the wrong way into the machine, while large meat pieces will lead to the previously mentioned clogging of the pins on the transport band with the disadvantages this leads to.

Another known type of filleting machine is sold by Barker/FoodCraft and uses rotating knives for the removal of the meat from the bone of meat material. This machine does not consider bones broken before treatment of the piece of meat for filleting either, even though the distributor maintains that breaks caused by the use of the machine are reduced. One disadvantage of this type of machine is that the meat has a tendency to be ground into minced meat by the rotating knives, so that the production of whole fillets of meat is difficult to achieve.

A third type of filleting machine is known from European Patent Application No. PCT/AU84/00246 with international publication No. WO 85/02320. This type of filleting device however, uses another principle than the present invention, since this known device uses water under high pressure to remove the meat from the bone of the treated meat pieces. Such an embodiment has, however, the disadvantages that the meat easily may become insipid and that the piece of bone must be secured very firmly since the piece of meat rotates at high speed during the filleting process to remove the loosened meat with the aid of centrifugal force, and will thus comprise a cumbersome process for this type of filleting.

US-A-4327463 discloses a meat de-bonding machine comprising securing means driven by a fluid-pressure-operated piston for securing a knuckle of the bone to have meat removed therefrom, a knife assembly comprising at least four blades for stripping the meat from such a held bone, and a frame movable relative to the securing means and carrying the knife assembly for establishing relative motion between said securing means and said knife assembly in a direction separating said knife assembly from said securing means during meat removal stroke. That apparatus requires the operator to assess which of the two knuckles on a bone is the larger in order to have that larger knuckle presented to the securing means.

The machine of US-A-4327463 is complex and expensive in construction, and is not readily adjustable for different bone sizes and shapes. In practice the bones from which meat is to be removed by that machine need to be of substantially the same dimensions as one another.

It is another object of the present invention to provide a device for filleting meat from bone-containing meat material where the whole meat fillets are kept mainly without being destroyed, where the degree of utilization of the meat pieces is high and the process is simple to perform. The distinguishing features of the invention are evident from claim 1.

Such a device will be described below with reference to the enclosed drawings, where:
FIGURE 1 shows an embodiment of the device according to the invention;
FIGURE 2 shows a partial view of the knife assembly in the device of Figure 1;
FIGURE 3 shows an extreme position of the knife assembly of Figure 2;
FIGURE 4 shows an embodiment of a holder in the device of Figure 1; and
FIGURE 5 shows an other embodiment of a holder in the device of Figure 1, shaped as a knife assembly.

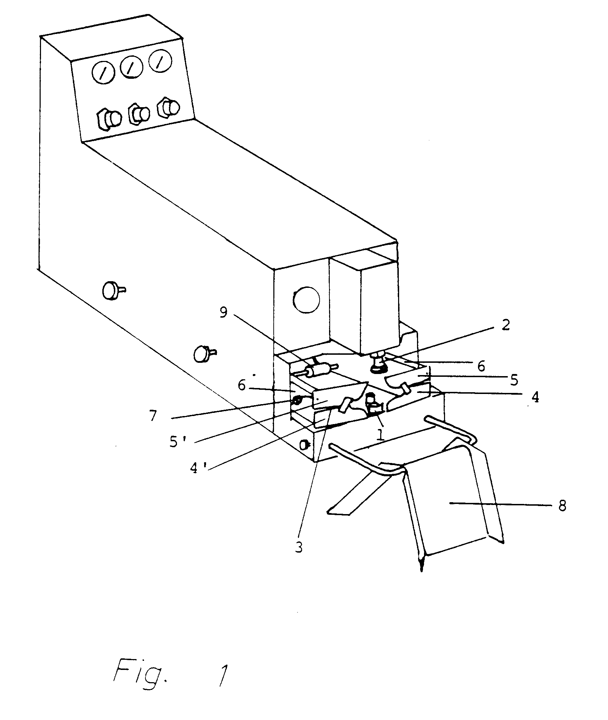

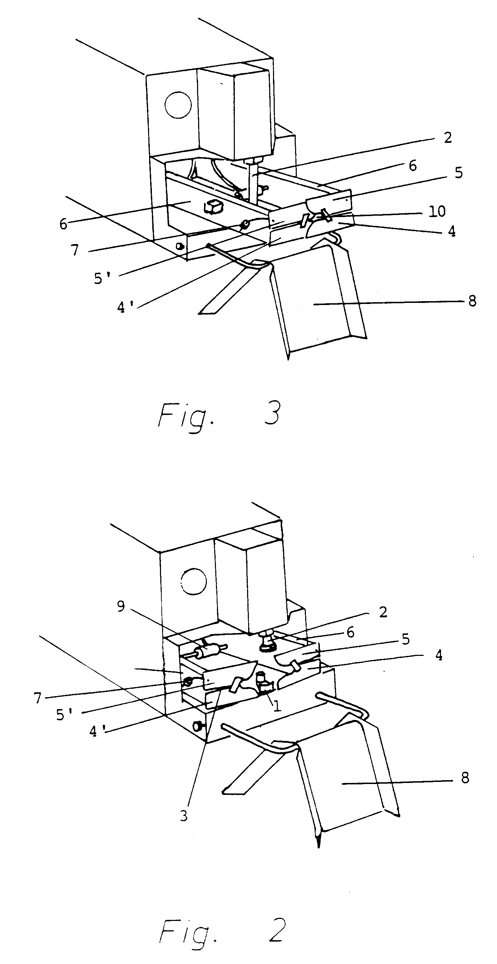

When using the device according to the invention, shown in Figure 1, it is necessary to use pieces of meat where there is only one knuckle. Such pieces of meat may be produced either by previously removing one of the knuckles of the piece of meat or by dividing a piece of meat with bone into two, so that each part retains one knuckle.

For removal of the meat from the bone in the treated piece of meat, the knuckle is placed in the slot (a) in the holder (1).

The rest of the disclosed treatment steps are automatic and preferably pneumatically or hydraulically controlled.

To secure the piece of meat, there is a securing device (Figures 1-3) shown as a piston (2) which is pneumatically or hydraulically controlled, to press the knuckle securely in the slot (a) in the exchangeable holder (1).

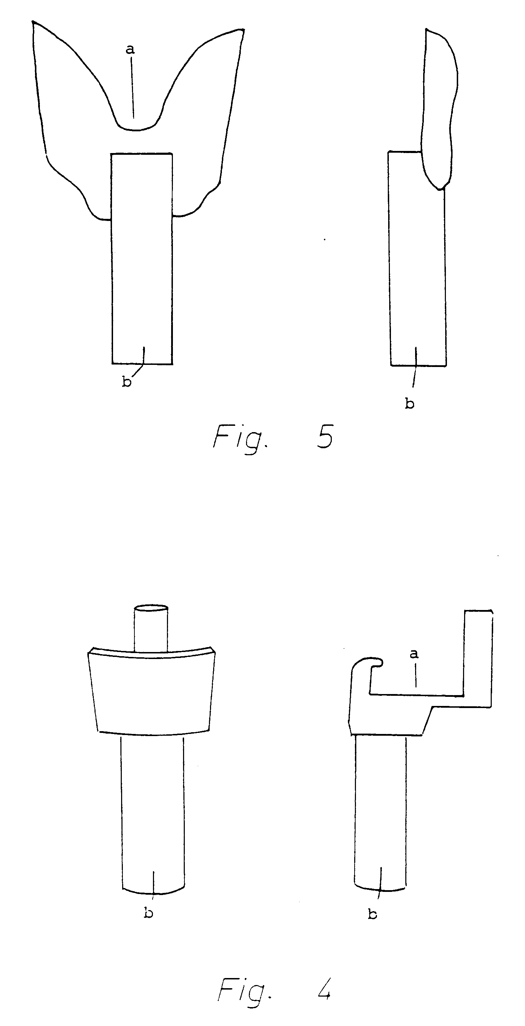

After clamping of the knuckle of the piece of meat, the components of the apparatus are in the positions depicted in Figures 1 and 2. The clamping area is at the forward end of the enclosure of the apparatus, which includes the vertically (as oriented in the drawings) movable piston (2) which coacts with the holder (1) to restrain or clamp the knuckle of the meat piece to be processed. Within this area, there is located a knife assembly (3), which includes at least four separate scraping knives, (in this case at least two, i.e. first and second, pairs of knife members, designated 4, 4' and 5, 5'). These knife members are mounted on a pair of side arms (6) which form a frame movable from the position shown in Figure 2 to the position shown in Figure 3. The lower and upper knife members (4, 4', 5, 5'), respectively, are blade-shaped members oriented for actuation toward one another in a slightly overlapping relation. The arms (6) are pneumatically or hydraulically controlled, and, as will be described, move in two directions. In one movement, the arms (6) move towards one another under force of a piston (9), and in another movement, they move together in a generally horizontal direction, which direction coincides with the orientation of the central section of bone of the piece of meat to be processed as will be described.

In the initial position, with the meat piece clamped by the knuckle of the bone, the arms (6) of the frame are retracted to the position shown in Figures 1 and 2. The four knives of the knife assembly (3) are initially out of engagement with the piece of meat. Each of the lowermost pair of knives (4, 4') is fixedly secured to the free end of one of the arms (6), while each of the uppermost pair of knives (5, 5') is pivotable relative to the lower knives (4, 4') and rotatably loaded by means of springs (7), so that the knives adapt themselves automatically to the shape and size of the bone which is to be filleted. In addition, the shape of the knives is such that in the operative pressed together condition (see Figure 3) they define between themselves an opening (10) which approximates to the cross-section of the bone.

The next step in the filleting process is to press together the two knife assemblies which are pneumatically or hydraulically controlled. During this movement, the spaced coacting pairs of knives (4, 4') and (5, 5') move toward the piece of meat to cut the tendons, ligaments and meat in the area adjacent the secured knuckle. The pressure of the arms (6) may be regulated, for instance by control of the piston (9) which is mounted between the two arms (6).

Thereafter, under pneumatic or hydraulic control, the two arms (6) along with the two pairs of knife members (4, 4') and 5, 5'), are extended to move, as a unit, forwards relative to the holder (1) in a direction outwardly of the machine to the position shown in Figure 3. The meat will thereby be removed from the central bone section and the mainly intact fillets will fall down on a separating chute (8), while the meat-free knuckle will fall down on the other side of the separating chute (8) when the piston (2) again moves upwards to release the knuckle and to receive another piece of meat.

In an alternative embodiment the holder (1) may itself comprise an approximately V-shaped knife. By placing the knuckle in such a holder a large part of the tendons and ligaments near the knuckle will be cut when the piston (2) presses the knuckle to secure it in the V-formed knife (see Figure 5).

The holder (1) may in addition comprise grooves (b) for the correct positioning in the device according to the invention.

The device according to the invention may also be used for meat which has been pre-treated to loosen the bone from the meat, for instance by ultra-sound treatment or by treatment with ligament-cleaving enzymes etc.

By using the above described device according to the present invention, the loss of meat material upon filleting will be reduced considerably, compared to previous techniques, and at the same time bone splinters will to a larger extent than previously be avoided in the filleted meat material. The present invention at the same time makes it possible to achieve better meat quality, because the meat fillets after treatment in a device according to the invention will be present mainly as undamaged meat.

## Claims

1. A device for the removal of meat from the central bone of meat pieces, said device comprising:- means driven by a fluid pressure operated piston for securing a knuckle of the bone to have the meat removed therefrom; a knife assembly comprising at least four blades for stripping the meat from such a held bone; and a frame (6) movable relative to the securing means (1, 2) and carrying the knife assembly for establishing relative motion between said securing means and said knife assembly in a direction separating said knife assembly from said securing means during a meat removal stroke; characterised in that the securing means (1, 2) comprise a holder (1), and pressing means (2) in the form of a piston for pressing said knuckle against said holder; and in that there are at least two pairs of said knife blades (4, 4', 5, 5') effective to co-operate by surrounding a said bone and acting simultaneously on it throughout a said meat removal stroke, whereof at least one pair of knife blades (4,4') is securely mounted to the movable frame (6), while the or each other pair of knife blades (5,5') is rotatably hinged and spring biased (7) for adaptation to the central bone of the piece of meat.

2. A device according to claim 1, characterised in that the holder (1) comprises an approximately V-shaped knife assembly to receive the central bone of the piece of meat.

3. A device according to claim 2, characterised in that the holder is exchangeable.

## Patentansprüche

1. Eine Vorrichtung zum Entfernen von Fleisch von dem Mittelknochen von Fleischstücken, wobei die Vorrichtung aufweist: eine durch einen durch Fluiddruck betriebenen Kolben angetriebene Einrichtung zum Sichern eines Knöchels des Knochens, um Fleisch davon zu entfernen; eine Messeranordnung, die zumindest vier Klingen zum In-Streifen-Schneiden des Fleisches von einem solchen gehaltenen Knochen aufweist; und ein Gestell (6), das relativ zu der Sicherungseinrichtung (1, 2) beweglich ist und die Messeranordnung trägt, um eine relative Bewegung zwischen der Sicherungseinrichtung und der Messeranordnung in einer Richtung zu ermöglichen, die die Messeranordnung von der Sicherungseinrichtung während eines Fleischentfernungsschlages bzw. einer fleischabschneidenden Bewegung trennt bzw. fernhält; dadurch gekennzeichnet, daß die Sicherungseinrichtung (1, 2) einen Halter (1) aufweist, und eine Drückvorrichtung (2) in der Form eines Kolbens zum Drucken des Knöchels gegen den Halter; und daß wenigstens zwei Paare der Messerklingen (4, 4', 5, 5') vorgesehen sind, die dahingehend wirksam sind, daß sie zusammenwirken, indem sie den Knochen umgeben und gleichzeitig durch einen Fleischentfernungsschlag bzw. eine fleischabschneidende Bewegung auf ihn einwirken, wobei wenigstens ein Paar von Messerklingen (4, 4') fest an dem beweglichen Gestell (6) angebracht ist, während das oder jedes andere Paar von Messerklingen (5, 5') für die Aufnahme des Mittelknochens des Fleischstückes dreh- bzw. schwenkbar aufgehängt und federnd vorgespannt ist (7).

2. Eine Vorrichtung nach Anspruch 1, dadurch gekennzeichnet, daß der Halter (1) eine näherungsweise V-förmige Messeranordnung zum Aufnehmen des Mittelknochens des Fleischstückes aufweist.

3. Eine Vorrichtung nach Anspruch 2, dadurch gekennzeichnet, daß der Halter austauschbar ist.

## Revendications

1. Un dispositif pour l'enlèvement de la viande sur l'os central de pièces de viande, ce dispositif comprenant: des moyens entraînés par un piston actionné par un fluide sous pression pour fixer une articulation de l'os dont la viande doit être enlevée; un ensemble de couteaux comprenant au moins quatre lames pour détacher la viande d'un os ainsi maintenu; et un châssis (6) mobile par rapport aux moyens de fixation (1, 2) et portant l'ensemble de couteaux de manière à établir un déplacement relatif entre lesdits moyens de fixation et ledit ensemble de couteaux suivant une direction séparant ledit ensemble de couteaux desdits moyens de fixation au cours d'une course d'enlèvement de la viande; caractérisé en ce que les moyens de fixation (1 et 2) comprennent un support (1) et des moyens de pressage (2) sous la forme d'un piston pour presser ladite articulation contre ledit support et en ce qu'il est prévu au moins deux paires de lames de couteaux (4, 4', 5, 5') propres à coopérer en entourant ledit os et en agissant simultanément sur lui pendant ladite course d'enlèvement de la viande, au moins une paire de lames de couteaux (4, 4') étant fixée rigidement au châssis mobile (6), tandis que la ou bien chacune des autres paires de lames de couteaux (5, 5') est articulée à rotation et est sollicitée élastiquement (7) pour s'adapter à l'os central de la pièce de viande.

2. Un dispositif selon la revendication 1, caractérisé en ce que le support (1) comprend un ensemble de couteaux approximativement en forme de V et destiné à recevoir l'os central de la pièce de viande.

3. Un dispositif selon la revendication 2, caractérisé en ce que le support est interchangeable.
